# EUROPEAN PATENT SPECIFICATION

(11) **EP 3 713 766 B1**
(45) Date of publication and mention of the grant of the patent: **13.03.2024**
(21) Application number: 18803957.2
(22) Date of filing: 15.11.2018
(51) Int. Cl.: B33Y 80/00, B29C 64/386

(54) **PRINTED SCALE FOR THREE-DIMENSIONALLY PRINTED OBJECT**
DRUCKSKALA FÜR DREIDIMENSIONAL GEDRUCKTES OBJEKT
ÉCHELLE IMPRIMÉE POUR OBJET IMPRIMÉ EN TROIS DIMENSIONS

(30) Priority: 20.11.2017 US 201762588701 P
(43) Date of publication of application: 30.09.2020
(73) Proprietor: Koninklijke Philips N.V., 5656 AG Eindhoven (NL)
(72) Inventor: VOGTMEIER, Gereon, 5656 AE Eindhoven (NL); GEGENMANTEL, Eike Gerhard, 5656 AE Eindhoven (NL)
(74) Representative: Philips Intellectual Property & Standards
(86) International application number: PCT/EP2018/081279
(87) International publication number: WO 2019/096873

(56) References cited:
- WO-A1-2016/137425
- US-A1- 2014 023 996
- D. SCHMAUSS ET AL: "Three-dimensional printing in cardiac surgery and interventional cardiology: a single-centre experience", EUROPEAN JOURNAL OF CARDIO-THORACIC SURGERY., vol. 47, no. 6, 26 August 2014 (2014-08-26), pages 1044-1052, XP055298897, DE ISSN: 1010-7940, DOI: 10.1093/ejcts/ezu310

## Description

### Technical Field

Various embodiments described herein are directed generally to three-dimensional printing and any other additive manufacturing technologies, e.g., including hybrid technologies that include additive and subtractive processing steps. More particularly, but not exclusively, various methods and apparatus disclosed herein relate to generating, based on three-dimensional data indicative of a physical structure, a data structure that represents a virtual three-dimensional model of the physical structure and includes an at least two-dimensional virtual scale that conveys one or more spatial measurements of the physical structure, e.g., for three-dimensional printing (or "additive manufacturing") purposes.

### Background

US 2014/023996 A1 discloses surveying a constructed structure which is georeferenceable in the real world, obtaining spatial data associated with the constructed structure, generating a digital three dimensional model of the constructed structure in a computer, and producing a physical model object with accurately surveyed as-built data of the constructed structure. The physical model object of the constructed structure can incorporate, on its surface, surveyed and measured useful real world intelligence, such as dimensions, georeference data, or orientation, associated with the constructed structure.

WO 2016/137425 A1 discloses a medical imaging phantom that is three-dimensionally printed. In one specific approach, three-dimensional printing allows for any number of variations in phantoms. A library of different phantoms, different inserts, different textures, different densities, different organs, different pathologies, different sizes, different shapes, and/or other differences allows for defining a specific phantom as needed. The defined phantom is then printed for calibration or other use in medical imaging.

The article by D. SCHMAUSS ET AL: "Three-dimensional printing in cardiac surgery and interventional cardiology: a single-centre experience", EUROPEAN JOURNAL OF CARDIO-THORACIC SURGERY., vol. 47, no. 6, 26 August 2014 (2014-08-26), pages 1044-1052, discloses that the fabrication of 3D printing models is feasible for perioperative planning and simulation in a variety of complex cases in paediatric and adult cardiac surgery, as well as in interventional cardiology.

Three-dimensional ("3D") printing (also referred to as "additive manufacturing") is useful in a variety of domains in which physical models are used extensively. For example, 3D printing is useful in manufacturing, e.g., for building prototypes of tools, machines, and/or other physical components that can be analyzed and/or tested. In some cases, 3D printing may be used to print final products that are released, e.g., commercially. As another example, 3D printing is particularly useful in the medical and medical research domains because physical anatomical structures can be captured as three-dimensional virtual models and then printed as physical anatomical models, which can be used for various purposes such as teaching, planning a surgery, and so forth. In order for 3D printed models to be most helpful, it is often beneficial that they have realistic surfaces. It would also be beneficial for 3D printed models to have relatively precise, or at least easily understandable, geometry. As one example, for surgeries in which a catheter is to be inserted into a vessel, it is important that mock vessels contained in a 3D-printed model are accurate so that the clinician knows whether the catheter is appropriately sized for the real-life surgery.

### Summary

The invention is defined by the independent claims. The dependent claims define advantageous embodiments.

The present disclosure is directed to methods and apparatus for printing scales for three-dimensionally printed objects, including anatomical structure models. In various embodiments, a three-dimensional virtual model is generated, e.g., based on sensor data (e.g., CT scan data, MRI data, ultrasound data, RGBd camera data, etc.) or based on human operation of computer-aided design ("CAD") software. A virtual scale is incorporated into the three-dimensional virtual model, e.g., by being virtually etched, stamped, engraved, tattooed, or otherwise included with a data structure representing the three-dimensional virtual model. This virtual scale conveys one or more spatial dimensions of the three-dimensional virtual model, and any resizing of the three-dimensional virtual model causes proportionate resizing of the virtual scale. Consequently, any distortion, resizing, reshaping, mirroring, or other changes to the three-dimensional model, whether intentional or unintentional, is effected on the virtual scale, and is carried over to any three-dimensional printout. A physical manifestation of the virtual scale that is printed with the three-dimensional printout may be compared with a known reference, such as a ruler, to detect any distortion between the original physical model and the three-dimensionally printed model.

It should be appreciated that all combinations of the foregoing concepts and additional concepts discussed in greater detail below (provided such concepts are not mutually inconsistent) illustrate the inventive subject matter disclosed herein.

### Brief Description of the Drawings

In the drawings, like reference characters generally refer to the same parts throughout the different views. Also, the drawings are not necessarily to scale, emphasis instead generally being placed upon illustrating various principles of the embodiments described herein.
Fig. 1 illustrates one non-limiting example of how three-dimensional data representing a physical structure may be captured and used to generate a data structure representing a virtual three-dimensional model of the physical structure, and then how the data structure may be used to three-dimensionally print a physical model of the physical structure that includes a physical manifestation of a virtual scale that conveys one or more spatial measurements of the physical structure, in accordance with various embodiments.
Fig. 2 depicts an alternative embodiment of a physical manifestation of a virtual scale that conveys one or more spatial measurements of a physical structure, in accordance with various embodiments.
Fig. 3 depicts another alternative embodiment of a physical manifestation of a virtual scale that conveys one or more spatial measurements of a physical structure, in accordance with various embodiments.
Fig. 4 depicts an example for practicing selected aspects of the present disclosure.
Fig. 5 depicts an example architecture of a computing system.

### Detailed Description

Three-dimensional ("3D") printing is useful in a variety of domains in which physical models are used extensively. For example, 3D printing is useful in manufacturing, e.g., for building prototypes of tools, machines, and/or other physical components that can be analyzed and/or tested. In some cases, 3D printing may be used to print final products that are released, e.g., commercially. As another example, 3D printing is particularly useful in the medical and medical research domains because physical anatomical structures can be captured as three-dimensional virtual models and then printed as physical anatomical models, which can be used for various purposes such as teaching, planning a surgery, and so forth. In order for 3D printed models to be most helpful, it is often beneficial that they have realistic surfaces. It would also be beneficial for 3D printed models to have relatively precise, or at least easily understandable, geometry.

In view of the foregoing, various embodiments and implementations of the present disclosure are directed to generating, based on three-dimensional data indicative of a physical structure, a data structure that represents a virtual three-dimensional model of the physical structure and includes a virtual scale in one or more dimensions that conveys one or more spatial measurements of the physical structure, e.g., for three-dimensional printing purposes.

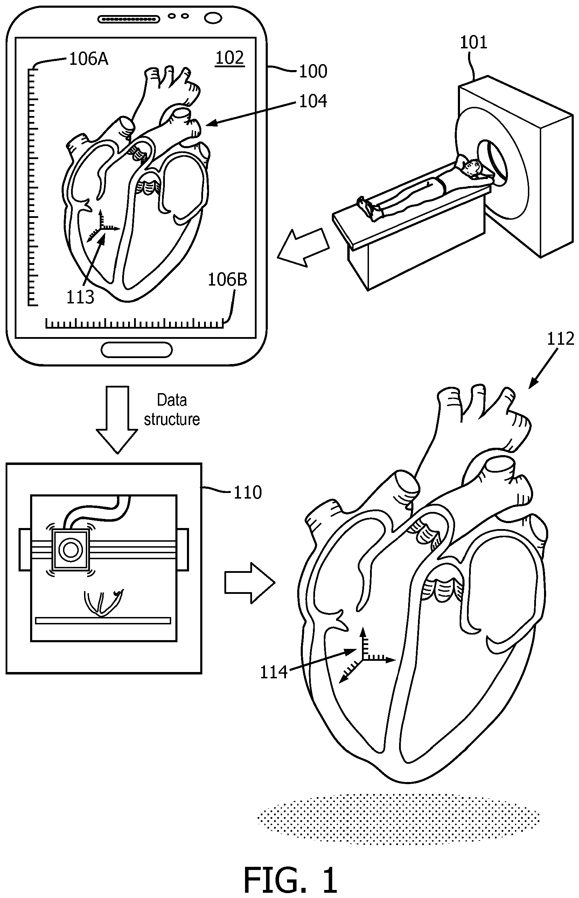

Referring to Fig. 1, in one embodiment, three-dimensional data representing a physical structure (in Fig. 1, one or more anatomical structures of a patient) may be generated by one or more sensors 101, such as one or more sensors of CT scan system depicted in Fig. 1. In other embodiments, three-dimensional data may be generated by other types of sensors, such as MRI or ultrasound systems. In the medical context, these three-dimensional data may often represent selected portions of a patient being scanned, such as one or more anatomical structures. In the non-medical context, three-dimensional data may be generated by optical sensors such as RGB cameras, RDGd cameras, stereographic cameras, laser scanners, etc., and may represent a variety of different physical structures, such as tools, equipment, vehicles (or parts of vehicles), toys, plants, robots, animals, buildings (or parts of buildings such as floors, rooms, ventilation systems, etc.), products (e.g., being developed), and so forth. In various implementations, the three-dimensional data may come in various forms, such as a 2.5D image, a point cloud, a three-dimensional voxel map, a vector-based three-dimensional model, etc.

In various embodiments, the generated three-dimensional data may include one or more spatial measurements of the physical structure that is captured. For example, if the captured physical structure is one or more internal organs of a patient, the spatial measurements may include spatial measurements in one to three dimensions (e.g., x, y, z). In some embodiments, the physical sensors may be inherently capable of detecting spatial dimensions (i.e. size) of the physical structure being captured. Additionally or alternatively, in some embodiments, one or more scaling components, such as visual indicia placed on or near the physical structure being captured, may be used as a reference to calculate a size of the physical structure.

Based on the three-dimensional data, in various embodiments, a data structure representing a virtual three-dimensional model of the physical structure may be generated, e.g., by one or more computing devices. The data structure may be created in various formats. In some embodiments, the data structure may be generated/stored as an additive manufacturing ("AMF") file. Additionally or alternatively, in some embodiments, the data structure may be generated/stored as a stereolithography ("STL") file. Other file types are contemplated herein, such as 3D manufacturing format ("3MF") files, Windows metafile ("WMF") files, etc.

For example, in Fig. 1, a tablet computer 100 is depicted as receiving the CT scan data from sensors 101 of CT scan system and rendering, on a touchscreen 102, a visual depiction 104 of the virtual three-dimensional model. While a tablet computer 100 is depicted in Fig. 1, this is not meant to be limiting. Virtual three-dimensional models may be viewed and/or acted upon using other types of computing systems, such as desktops, laptops, smart phones, smart glasses (e.g., which may render virtual three-dimensional models in virtual reality and/or augmented reality), and so forth.

Examples described herein primarily relate to generating three-dimensional data to represent physical structures by obtaining, from sensors such as cameras, CT scanners, MRI systems, etc., three-dimensional data. However, this is not meant to be limiting. In other embodiments, data structures representing virtual three-dimensional models may be created using software such as computer-aided design ("CAD") software. For example, three-dimensional CAD software may be used, for instance, to design a tool, and the same software or different software may be used to three-dimensionally print, e.g., using a 3D printer, a physical model of the virtual model.

In Fig. 1, one or more scales 106A and 106B are rendered on touchscreen 102. These scales may convey spatial dimension data associated with visual depiction 104 of the virtual three-dimensional model. Using one or more scales 106A/B, a user may visually gauge a size of all or a portion of the original physical structure that is recreated virtually using the visual depiction 104 of the virtual three-dimensional model. If the user were to zoom in towards the rendered depiction 104 or zoom out from the rendered depiction 104, one or more scales 106A/B may adjust on touchscreen 102 automatically.

In various scenarios, the virtual three-dimensional model may be resized under various circumstances. In some implementations, a user may alter the three-dimensional model intentionally, e.g., by modifying one or more scaling parameters employed by software used to view the three-dimensional virtual model. For example, a user may morph at least part of the virtual three-dimensional model on touchscreen (e.g., pinching depiction 104 to cause it to be resized). In some cases, a user may intentionally operate the software to modify a scaling parameter in one or more dimensions, e.g., to make the virtual three-dimensional model narrower, wider, taller, shorter, thinner, fatter, etc. Perhaps more commonly, when the data structure representing the virtual three-dimensional model is sent to a three-dimensional printer to be printed, the physical model of the physical structure that the printer creates may not necessarily be exactly to scale with the original physical model, even if the user intended the physical model to be to scale. This can happen for a variety of reasons.

As one example, the three-dimensional printing process is subject to gravitational force. Thus, no matter the orientation of the physical model being printed, the fluid used to print the model may undergo some sagging or unintended morphing due to gravity, e.g., before the printing fluid has time to solidify. As another example, various software processes, either as part of the software application being used to view and/or initiate printing the physical model, or as one or more intermediate software processes (e.g., software driver executing on tablet computer 100, software executing on the three-dimensional printer itself), may unintentionally introduce minor scaling artifacts (e.g., slight alteration in length, width, thickness, etc.) to the printed physical model. Thus, for instance, sending the exact same data structure representing the virtual three-dimensional model to two different three-dimensional printers may cause two physical models of slightly different dimensions to be printed.

In addition to software differences, various three-dimensional printers may have different hardware components and/or utilize various different three-dimensional printing techniques to accomplish three-dimensional printing. These techniques may include but are not limited to those defined in ISO/ASTM52900-15: binder jetting, directed energy deposition, material extrusion, material jetting, powder bed fusion, sheet lamination, and vat photopolymerization. Other techniques are possible as well, such as fused filament fabrication (also referred to as fused deposition modeling). Various aspects of each technique may cause, intentionally or unintentionally, a printed physical model to vary in spatial dimensions ever so slightly from either the CAD model or the real-life physical structure that was originally captured for reproduction.

Accordingly, in various embodiments, an at least two-dimensional virtual scale that conveys the one or more spatial measurements may be incorporated (e.g., virtually etched, stamped, engraved, etc.) with the data structure representing the virtual three-dimensional model of the physical structure. In Fig. 1, a depiction 113 of the at least two-dimensional virtual scale is rendered on touchscreen 102 overlaying the depiction 104 of the virtual three-dimensional model. However, this is not required, and in various embodiments, depiction 113 may be omitted or rendered elsewhere on touchscreen 102, such as off to the side.

In various embodiments, the at least two-dimensional virtual scale may be incorporated with the data structure representing the virtual three-dimensional model of the physical structure. In various embodiments, the at least two-dimensional virtual scale may be resized directly in proportion with any resizing of the virtual three-dimensional model. In other words, the at least two-dimensional scale may be "locked" into the virtual three-dimensional model such that if the virtual three-dimensional model is somehow resized by some measure, the at least two-dimensional scale is also resized by a corresponding measure. For example, one or more pixels and/or voxels of the data structure representing the virtual three-dimensional model may be added, modified, and/or replaced to include pixels/voxels that collectively convey the at least two-dimensional virtual scale.

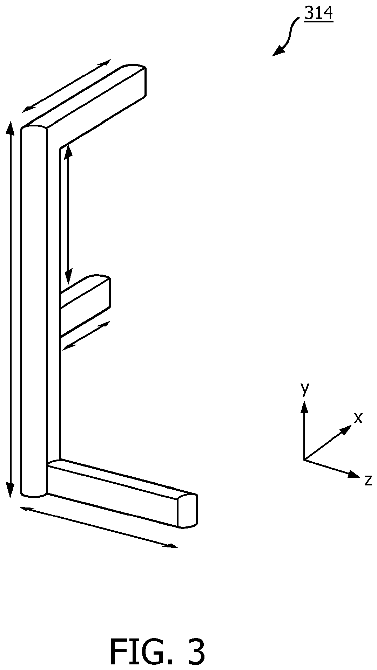

Thereafter, whenever the virtual three-dimensional model is printed using a three-dimensional printer, a physical manifestation of the at least two-dimensional virtual scale is also printed. One example of this is depicted in Fig. 1. At bottom left, a three-dimensional printer 110 is provided with a data structure representing the virtual three-dimensional model (e.g., the patient's heart acquired through CT scanning) that is rendered on touchscreen 102 as depiction 104. Following the arrows, at bottom right, a physical model 112 of the physical structure (i.e., a three-dimensionally printed model of the patient's heart) is printed. Physical model 112 includes a physical manifestation 114 of the at least two-dimensional virtual scale. In this example, the physical manifestation 114 takes the form of a three-dimensional scale, but this is not required. In other embodiments, the physical manifestation 114 may take other forms, such as a specially-designed geometry that can be analyzed (e.g., viewed) to determine, in addition to or instead of spatial dimensions, whether the physical model has been mirrored or flipped from the original physical structure, whether any bending or other similar distortion has occurred, etc. Fig. 3 depicts one non-limiting example of a special geometry that may be employed as a physical manifestation 114 of a virtual scale.

After the process depicted in Fig. 1 is complete and physical model 112 is created, a user can examine physical model 112, and in particular can examine physical manifestation 114 of the at least two-dimensional virtual scale, to determine whether physical model 112 is printed to scale, or more generally, determine a scale at which physical model is printed. For example, physical manifestation 114 is printed on an interior surface of the physical model 112 and includes a series of detectable (e.g., visible to the naked eye, visible with UV light, x-ray absorbing materials, reflecting material, etc.) indicia, such as a series of spaced markings, similar to those found on a ruler, in each dimension (e.g., x, y, z). These detectable indicia may be compared, for instance, with similar indicia a ruler (or another tool such as a caliper, yard stick, tape measure, etc.) to determine a scale at which physical model 112 was three-dimensionally printed. If a scale represented by physical manifestation 114 of the at least two-dimensional virtual scale corresponds exactly with the indicia of the measuring tool, the user knows that physical model 112 was printed exactly to scale. If the scale represented by physical manifestation 114 of the at least two-dimensional virtual scale is smaller or larger than the indicia of the measuring tool, the user will know that physical model 112 is resized from (e.g., larger than, smaller than) the original physical structure.

In some embodiments, automated scanning tools may be employed to enable automatic quality control of three-dimensionally printed products. These automated scanning tools may employ various technologies, such as optical scanners, cameras, CT scanners, ultrasound devices, MRI systems, x-ray systems (e.g., x-tray tomography), and so forth. They may be configured to automatically scan physical objects printed using three-dimensional printers, e.g., as part of an assembly line, and in particular may locate and analyze physical manifestations of virtual scales generated using techniques described herein. In some embodiments, imaging phantoms, which are used to evaluate, analyze, and tune performance of medical imaging devices such as CT scanners, MRI systems, etc., may be printed using three-dimensional printers. Virtual scales may be incorporated into three-dimensional virtual models of these imaging phantoms, so that when printed, the imaging phantoms can be evaluated to ensure they have not been spatially distorted, mirrored, flipped, etc. Once the imaging phantoms have been confirmed to be accurate (or at least their geometries, including any distortions, well-documented), they may be used to calibrate various medical imaging systems.

It is also possible that physical model 112 is spatially accurate in one or more dimensions but inaccurate in one or more other dimensions. As mentioned previously, gravity can have an effect on some three-dimensional printouts, such that physical model 112 is spatially accurate in the x and z directions, but somewhat distorted (e.g., shortened) in the y dimension. Additionally or alternatively, in some cases, the user may operate tablet computer 100 to intentionally distort the virtual three-dimensional model in one or more dimensions, e.g., for a variety of reasons, before printing. The at least-two-dimensional virtual scale that was previously incorporated into the data structure will, consequently, also be distorted in the same fashion.

At any rate, whatever the source and/or reason for the distortion, the distortion will be evident in the physical manifestation 114 of the at least two-dimensional virtual scale. Suppose the at least two-dimensional virtual scale has spaced markings that delineate, for instance, *n* millimeters. Suppose further that physical model 112 is three-dimensionally printed such that it is intentionally or unintentionally distorted in one or more dimensions. In the distorted dimensions, the millimeter spaced markings of physical manifestation 114 will not line up precisely with actual millimeter markings of, for instance, a line gauge. For example, they may be spaced closer together or farther apart. This may be detected by the user, so that the user knows that physical model 112 has a different scale or orientation than the original physical structure, or has been mirrored, flipped, or otherwise distorted. With specialized geometries like that depicted in Fig. 3, in some embodiments, automated scanners may be employed, for instance, to monitor three-dimensionally printed products to ensure they have consistent scale, are not mirrored or otherwise distorted, etc.

In Fig. 1, physical manifestation 114 of the at least two-dimensional virtual scale is printed on an interior surface of the physical model, e.g., within a heart chamber. However, this is not meant to be limiting. In various embodiments, physical manifestation 114 of the at least two-dimensional virtual scale may be incorporated elsewhere on or within the virtual three-dimensional model, and hence, three-dimensionally printed on or within other locations of physical model 112. For example, in some embodiments, physical manifestation 114 may be incorporated underneath a surface of the virtual three-dimensional model, and hence, printed within material used to print physical model 112, e.g., embedded between deposited transparent and/or translucent printing layers. As another example, physical manifestation 114 may be incorporated onto an outside surface of the virtual three-dimensional model, and hence, printed on an outside surface of physical model 112.

Physical manifestation 114 is also not required to be visible with the naked eye. For example, in some embodiments, physical manifestation 114 may be printed in a color and/or material that is detectable using infrared or ultraviolet light. Additionally or alternatively, in some embodiments, other materials or special processing may be applied to generate the physical manifestation 114, such as laser sintering, porous structures, or even with a combination of all materials/processes that are used in the overall physical model 112 (e.g., so that distortions between materials/processes will also be evident in the physical manifestation 114 of the virtual scale). These may be detected using various techniques, such as x-ray, x-ray tomography (e.g., 3D x-ray), phase contrast x-ray imaging, etc. In some embodiments, a user may operate a software application (e.g., the software application used to view the virtual three-dimensional model, printer driver software, etc.) to specifically cause the physical manifestation to be printed in a manner that is visible or not to the naked eye. In some embodiments, physical manifestation 114 may be printed in a location and/or with material(s) (e.g., contrast agents) selected such that physical manifestation 114 is visible during x-rays or CT scans of a three-dimensionally printed model. Moreover, physical manifestation 114 need not always be a ruler-like element. For example, in some embodiments, a density change in the printed volume may be induced, e.g., by changes of the laser intensity during the melting/laser sintering process. This may allow for an invisible watermark-like scale element.

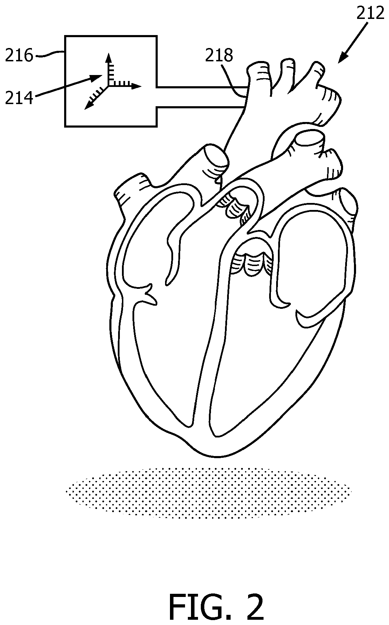

Fig. 2 depicts an alternative embodiment of a three-dimensionally printed physical model 212 to that of Fig. 1 (112). In Fig. 2, physical model 212 includes a physical manifestation 214 of at least two-dimensional virtual scale that is printed on a tab 216 that is separate from the main structure of physical model 212. In some embodiments, tab 216 may be frangibly detached from the rest of physical model 212, e.g., using a frangible connection 218 that may be, for instance, perforated for easy detachment. However, as was the case with Fig. 1, physical manifestation 214, and in some cases tab 216, may be incorporated into the virtual three-dimensional model verbatim. That way, a user can quickly and easily determine whether physical model 212 was printed to exact scale, and then remove tab 216 if desired.

While examples described herein have related primarily to detecting physical distortions in one or more dimensions (e.g., growing, shrinking, etc.), this is not meant to be limiting. Physical manifestations of virtual scales can be used for other purposes, such as detecting rotation, mirroring, etc. For example, if each dimension of the physical manifestation of the virtual scale includes a label such as "x", "y", or "z", then the user can easily determine an orientation of the three-dimensionally printed physical model. And in addition to changes in scale along various dimensions, other changes may be easily detected, such as changes in angles between components. For example, suppose a physical manifestation of an x/y/z axis printed within a physical model does not have right angles between the various dimensions. That may suggest angular distortion of the underlying three-dimensional virtual model or angular distortion introduced during three-dimensional printing. As noted above, three-dimensionally printed physical manifestations of multi-dimensional virtual scales need not be explicit. For example, instead of spaced markings and/or numbers, two- or three-dimensional elements may be added that have known relationships between various internal dimensions.

Fig. 3 depicts one non-limiting example of what an at least two-dimensional virtual scale may look like, both when rendered on a display as an integral part of the three-dimensional model and as three-dimensionally printed on a physical model. In Fig. 3, physical manifestation 314 of a virtual at least two-dimensional virtual scale has an "F" shape in the x and y dimensions. An upper arm of the "F" shape may be, for instance, twice as long as the lower arm. The height of the "F" along the y axis may be the same as, for instance, the upper arm of the "F" along the x axis. Additionally, a transverse leg may be extended in another dimension, such as along the z axis. This z axis extension may have the same length as, for instance, the upper arm of the "F" in the x dimension. Accordingly, any distortion in the x, y, and/or z dimensions may be readily detected by comparing these various lengths.

Techniques described herein may give rise to a variety of technical benefits and advantages. For example, as noted above, accurately printing anatomical structures, e.g., with vessels having accurate dimensions, may enable a clinician to better prepare for surgery. The clinician may be able to test different size catheters in the vessels, and/or may be able to determine the correct size of implants, stents, replacement heart valves, etc. More generally, techniques described herein provide a simple way to verify that three-dimensionally printed models are accurate or inaccurate, as well as a simple way to determine how virtual three-dimensional models were altered prior to printing.

While examples described herein have included virtual scales and physical manifestations thereof being contained in a unitary component, this is not meant to be limiting. In various embodiments, one or more dimensions of the virtual scale and/or physical manifestation thereof may be incorporated into the three-dimensional virtual/physical models at multiple locations. For example, the x and z scaling indicators may be contained on the bottom of a printed model (not necessarily connected to each other), and the y scaling indicator may be printed elsewhere on the physical model, such as on the side. Moreover, while examples described herein dealt with at least two-dimensional virtual scales, this is not meant to be limiting. In various embodiments, a virtual scale having a single dimension (e.g., x, y, or z) may still be useful.

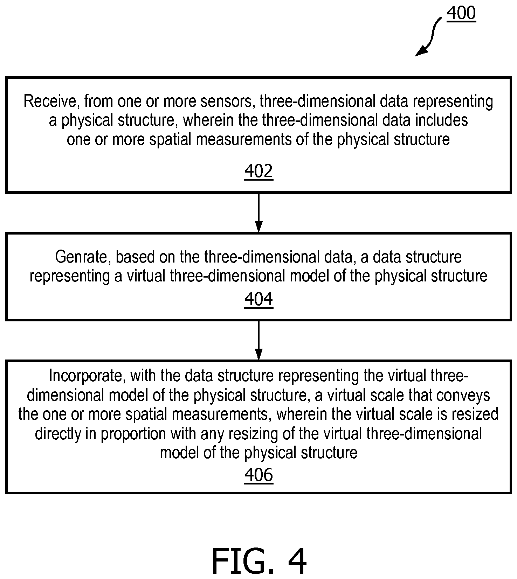

Fig. 4 depicts an example method 400 for practicing selected aspects of the present disclosure, in accordance with various embodiments. For convenience, the operations of the flow chart are described with reference to a system that performs the operations. This system may include various components of various computer systems, including one or more computing systems and/or three-dimensional printers depicted herein. Moreover, while operations of method 400 are shown in a particular order, this is not meant to be limiting. One or more operations may be reordered, omitted or added.

At block 402, the system may receive, e.g., from one or more sensors 101 (e.g., CT scanner in Fig. 1, an MRI system, an ultrasound system, one or more RGBd cameras, etc.), three-dimensional data representing a physical structure. In various embodiments, the three-dimensional data may include one or more spatial measurements of the physical structure. For example, depending on the modality and/or resolution of the input sensors, spatial dimensions of the entire physical structure, or a selected portion thereof, may be captured. Additionally or alternatively, in some embodiments, some sort of reference indicia, such as a rule, a printed reference scale, etc., may be captured and used to calculate spatial dimensions of the physical structure. In embodiments in which the three-dimensional virtual model is generated synthetically, e.g., using CAD software, block 402 may be omitted and/or replaced with operations related to creating the three-dimensional model manually.

At block 404, the system may generate, e.g., based on the three-dimensional data, a data structure representing a virtual three-dimensional model of the physical structure. As noted above, in some embodiments the data structure may include a computer file that may be capable of being three-dimensionally printed, such as an STL file or an AMF file. The data structure that represents the three-dimensional virtual model, and into which the virtual scale is incorporated, may be portable, e.g., as an STL file. That way, the data structure can be shared amongst multiple users and/or printed at multiple locations using multiple different three-dimensional printers. This may provide a reliable way for multiple parties, such as multiple clinicians, to inexpensively share data and print out respective copies of the same three-dimensional virtual model. Each clinician will know whether their respective printout is accurate or not, and can act accordingly, either by reprinting or simply taking the inaccuracy into consideration.

At block 406, the system may incorporate, with the data structure representing the virtual three-dimensional model of the physical structure, a virtual scale that conveys the one or more spatial measurements. In some embodiments, the virtual scale may be resized directly in proportion with any resizing of the virtual three-dimensional model of the physical structure that occurs, for instance, in response to deliberate manipulation by a user and/or in response to unintentional distortion that often occurs during the three-dimensional printing process. In other words, the virtual scale may be virtually etched, embedded, or tattooed, or engraved on the three-dimensional virtual model so that any dimensional changes to the three-dimensional virtual model are passed on/carry over to any three-dimensionally printed physical model. As noted above, in various embodiments, the data structure may be printable, using a three-dimensional printer, to create a physical model of the physical structure that includes a physical manifestation of the virtual scale.

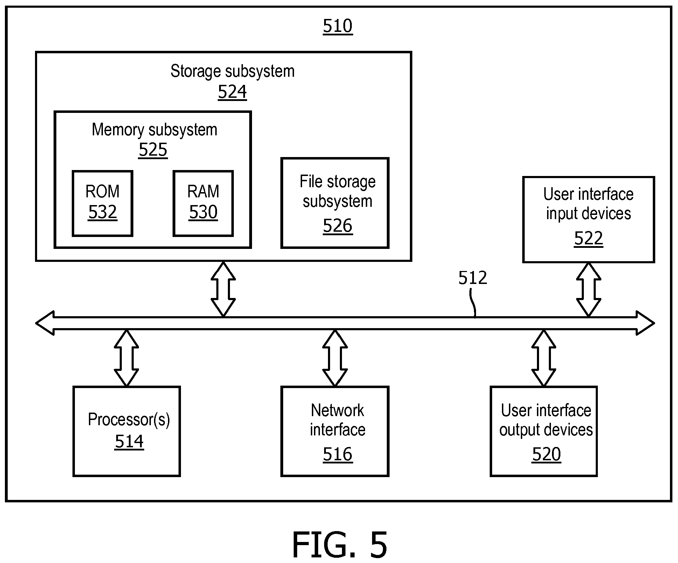

Fig. 5 is a block diagram of an example computing device 510 that may optionally be utilized to perform one or more aspects of techniques described herein. Computing device 510 typically includes at least one processor 514 which communicates with a number of peripheral devices via bus subsystem 512. These peripheral devices may include a storage subsystem 524, including, for example, a memory subsystem 525 and a file storage subsystem 526, user interface output devices 520, user interface input devices 522, and a network interface subsystem 516. The input and output devices allow user interaction with computing device 510. Network interface subsystem 516 provides an interface to outside networks and is coupled to corresponding interface devices in other computing devices.

User interface input devices 522 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computing device 510 or onto a communication network.

User interface output devices 520 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 510 to the user or to another machine or computing device.

Storage subsystem 524 stores programming and data constructs that provide the functionality of some or all of the modules described herein. For example, the storage subsystem 524 may include the logic to perform selected aspects of the method of Fig. 4, as well as to implement various components depicted in Fig. 1.

These software modules are generally executed by processor 514 alone or in combination with other processors. Memory 525 used in the storage subsystem 524 can include a number of memories including a main random access memory (RAM) 530 for storage of instructions and data during program execution and a read only memory (ROM) 532 in which fixed instructions are stored. A file storage subsystem 526 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 526 in the storage subsystem 524, or in other machines accessible by the processor(s) 514.

Bus subsystem 512 provides a mechanism for letting the various components and subsystems of computing device 510 communicate with each other as intended. Although bus subsystem 512 is shown schematically as a single bus, alternative implementations of the bus subsystem may use multiple busses.

Computing device 510 can be of varying types including a workstation, server, computing cluster, blade server, server farm, or any other data processing system or computing device. Due to the ever-changing nature of computers and networks, the description of computing device 510 depicted in Fig. 5 is intended only as a specific example for purposes of illustrating some implementations. Many other configurations of computing device 510 are possible having more or fewer components than the computing device depicted in Fig. 5.

While several inventive embodiments have been described and illustrated herein, those of ordinary skill in the art will readily envision a variety of other means and/or structures for performing the function and/or obtaining the results and/or one or more of the advantages described herein.

More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that the invention is defined by the appended claims.

All definitions, as defined and used herein, should be understood to control over dictionary definitions and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "having," "containing," and the like are to be understood to be open-ended, i.e., to mean including but not limited to. It should be understood that reference signs used in the claims pursuant to Rule 43(7) EPC do not limit the scope.

## Claims

1. A method implemented by one or more processors, the method comprising:
receiving (402), from one or more sensors (101), three-dimensional data representing a physical structure, wherein the three-dimensional data includes one or more spatial measurements of the physical structure;
generating (404), based on the three-dimensional data, a data structure representing a virtual three-dimensional model of the physical structure; and
incorporating (406), with the data structure representing the virtual three-dimensional model of the physical structure, an at least two-dimensional virtual scale that conveys the one or more spatial measurements. wherein the at least two-dimensional virtual scale has spaced markings or two- or three-dimensional elements with known relationships between various internal dimensions, and wherein the at least two-dimensional virtual scale is resized directly in proportion with any resizing of the virtual three-dimensional model of the physical structure;
wherein the data structure is such that a three-dimensional printer (110) is able to use the data structure to create a physical model (112) of the physical structure that includes a physical manifestation (114, 214, 314) of the at least two-dimensional virtual scale.

2. The method of claim 1, wherein the one or more spatial measurements are determined based on an image resolution of one or more of the sensors.

3. The method of claim 1, wherein the physical manifestation of the at least two-dimensional virtual scale includes at least a first detectable indication of spatial measurement in a first dimension and a second detectable indication of spatial measurement in a second dimension that is different than the first dimension.

4. The method of claim 3, wherein the physical manifestation of the at least two-dimensional virtual scale further includes a third detectable indication of spatial measurement in a third dimension that is different from the first and second dimensions.

5. The method of claim 1, wherein the physical manifestation of the at least two-dimensional virtual scale comprises a frangibly-separable piece (216) of the physical model of the physical structure.

6. The method of claim 1, wherein the physical manifestation of the at least two-dimensional scale is visibly printed on a surface of the physical model of the physical structure.

7. The method of claim 1, wherein the physical manifestation of the at least two-dimensional scale is visibly printed within the physical model of the physical structure.

8. The method of claim 1, wherein the physical manifestation of the at least two-dimensional scale is printed using a material or process that is detectable using one or more of the following: infrared, ultraviolet light, and x-ray radiation.

9. The method of claim 1, wherein the at least two-dimensional virtual scale is affected by one or more scaling parameters employed by software operated to view the virtual three-dimensional model of the physical structure.

10. The method of claim 1, wherein the physical structure is an anatomical structure, and the three-dimensional data comprises magnetic resonance imaging ("MRI") data, computerized tomography ("CT") data, ultrasound data, and x-ray tomography.

11. The method of claim 1, wherein the physical manifestation of the at least two-dimensional scale is printed in a color that is detectable using infrared or ultraviolet light.

12. A computer program product comprising instructions that enable a processor to perform a method as claimed in any of the preceding claims.

13. A system comprising one or more processors and memory operably coupled with the one or more processors, wherein the memory stores instructions that enable the one or more processors to perform a method as claimed in any of the preceding method claims 1-11.

## Patentansprüche

1. Verfahren, das von einem oder mehreren Prozessoren implementiert wird, wobei das Verfahren umfasst:
Empfangen (402) von einem oder mehreren Sensoren (101) dreidimensionaler Daten, die eine physische Struktur darstellen, wobei die dreidimensionalen Daten eine oder mehrere räumliche Messungen der physischen Struktur umfassen;
Erzeugen (404), basierend auf den dreidimensionalen Daten, einer Datenstruktur, die ein virtuelles dreidimensionales Modell der physischen Struktur darstellt; und
Einbeziehen (406), wobei die Datenstruktur das virtuelle dreidimensionale Modell der physischen Struktur darstellt, einer mindestens zweidimensionalen virtuellen Skala, die die eine oder mehreren räumlichen Messungen übermittelt, wobei die mindestens zweidimensionale virtuelle Skala beabstandete Markierungen oder zwei- oder dreidimensionale Elemente mit bekannten Beziehungen zwischen verschiedenen Innenabmessungen aufweist, und wobei die Größe der mindestens zweidimensionalen virtuellen Skala direkt proportional zu jeder Größenänderung des virtuellen dreidimensionalen Modells der physischen Struktur geändert wird;
wobei die Datenstruktur so beschaffen ist, dass ein dreidimensionaler Drucker (110) die Datenstruktur verwenden kann, um ein physisches Modell (112) der physischen Struktur zu erstellen, das eine physische Manifestation (114, 214, 314) der mindestens zweidimensionalen virtuellen Skala umfasst.

2. Verfahren nach Anspruch 1, wobei die eine oder mehreren räumlichen Messungen basierend auf einer Bildauflösung von einem oder mehreren der Sensoren bestimmt werden.

3. Verfahren nach Anspruch 1, wobei die physische Manifestation der mindestens zweidimensionalen virtuellen Skala mindestens einen ersten erkennbaren Hinweis auf eine räumliche Messung in einer ersten Dimension und einen zweiten erkennbaren Hinweis auf eine räumliche Messung in einer zweiten Dimension umfasst, die sich von der ersten Dimension unterscheidet.

4. Verfahren nach Anspruch 3, wobei die physische Manifestation der mindestens zweidimensionalen virtuellen Skala ferner einen dritten erkennbaren Hinweis auf eine räumliche Messung in einer dritten Dimension umfasst, die sich von der ersten und zweiten Dimension unterscheidet.

5. Verfahren nach Anspruch 1, wobei die physische Manifestation der mindestens zweidimensionalen virtuellen Skala ein zerbrechlich trennbares Stück (216) des physischen Modells der physischen Struktur umfasst.

6. Verfahren nach Anspruch 1, wobei die physische Manifestation der mindestens zweidimensionalen Skala sichtbar auf eine Oberfläche des physischen Modells der physischen Struktur gedruckt wird.

7. Verfahren nach Anspruch 1, wobei die physische Manifestation der mindestens zweidimensionalen Skala sichtbar innerhalb des physischen Modells der physischen Struktur gedruckt wird.

8. Verfahren nach Anspruch 1, wobei die physische Manifestation der mindestens zweidimensionalen Skala unter Verwendung eines Materials oder Prozesses gedruckt wird, der unter Verwendung eines oder mehrerer der folgenden Elemente erkennbar ist: Infrarot, ultraviolettes Licht und Röntgenstrahlung.

9. Verfahren nach Anspruch 1, wobei die mindestens zweidimensionale virtuelle Skala durch einen oder mehrere Skalierungsparameter beeinflusst wird, die von Software verwendet werden, die zum Betrachten des virtuellen dreidimensionalen Modells der physischen Struktur betrieben wird.

10. Verfahren nach Anspruch 1, wobei die physische Struktur eine anatomische Struktur ist und die dreidimensionalen Daten Magnetresonanztomographie ("MRT")-Daten, Computertomographie ("CT")-Daten, Ultraschalldaten und Röntgentomographie umfassen.

11. Verfahren nach Anspruch 1, wobei die physische Manifestation der mindestens zweidimensionalen Skala in einer Farbe gedruckt wird, die unter Verwendung von Infrarot- oder Ultraviolettlicht erkennbar ist.

12. Computerprogrammprodukt, das Anweisungen umfasst, die es einem Prozessor ermöglichen, ein Verfahren nach einem der vorhergehenden Ansprüche auszuführen.

13. System, das einen oder mehrere Prozessoren und einen Speicher umfasst, der operativ mit dem einen oder den mehreren Prozessoren gekoppelt ist, wobei der Speicher Anweisungen speichert, die es dem einen oder den mehreren Prozessoren ermöglichen, ein Verfahren gemäß einem der vorhergehenden Verfahrensansprüche 1-11 auszuführen.

## Revendications

1. Procédé mis en œuvre par un ou plusieurs processeurs, le procédé consistant à:
recevoir (402), à partir d'un ou plusieurs capteurs (101), des données tridimensionnelles représentant une structure physique, où les données tridimensionnelles comprennent une ou plusieurs mesures spatiales de la structure physique;
générer (404), sur la base des données tridimensionnelles, une structure de données représentant un modèle tridimensionnel virtuel de la structure physique; et
incorporer (406), à la structure de données représentant le modèle tridimensionnel virtuel de la structure physique, une échelle virtuelle au moins bidimensionnelle qui transmet l'une ou plusieurs mesures spatiales, où l'échelle virtuelle au moins bidimensionnelle comporte des marques espacées ou des éléments bidimensionnels ou tridimensionnels avec des relations connues entre diverses dimensions internes, et où l'échelle virtuelle au moins bidimensionnelle est redimensionnée directement proportionnellement à tout redimensionnement du modèle virtuel tridimensionnel de la structure physique;
où la structure des données est telle qu'une imprimante tridimensionnelle (110) est capable d'utiliser la structure de données pour créer un modèle physique (112) de la structure physique qui comprend une manifestation physique (114, 214, 314) de l'échelle virtuelle au moins bidimensionnelle.

2. Procédé selon la revendication 1, dans lequel l'une ou plusieurs mesures spatiales sont déterminées sur la base d'une résolution d'image d'un ou plusieurs des capteurs.

3. Procédé selon la revendication 1, dans lequel la manifestation physique de l'échelle virtuelle au moins bidimensionnelle comprend au moins une première indication détectable de mesure spatiale dans une première dimension et une seconde indication détectable de mesure spatiale dans une seconde dimension qui est différente de la première dimension.

4. Procédé selon la revendication 3, dans lequel la manifestation physique de l'échelle virtuelle au moins bidimensionnelle comprend en outre une troisième indication détectable de mesure spatiale dans une troisième dimension qui est différente des première et seconde dimensions.

5. Procédé selon la revendication 1, dans lequel la manifestation physique de l'échelle virtuelle au moins bidimensionnelle comprend une pièce séparable de manière frangible (216) du modèle physique de la structure physique.

6. Procédé selon la revendication 1, dans lequel la manifestation physique de l'échelle au moins bidimensionnelle est visiblement imprimée sur une surface du modèle physique de la structure physique.

7. Procédé selon la revendication 1, dans lequel la manifestation physique de l'échelle au moins bidimensionnelle est visiblement imprimée dans le modèle physique de la structure physique.

8. Procédé selon la revendication 1, dans lequel la manifestation physique de l'échelle au moins bidimensionnelle est imprimée en utilisant un matériau ou un processus qui est détectable en utilisant un ou plusieurs des suivants: l'infrarouge, la lumière ultraviolette, et le rayonnement de rayons X.

9. Procédé selon la revendication 1, dans lequel l'échelle virtuelle au moins bidimensionnelle est affectée par un ou plusieurs paramètres de mise à l'échelle employés par un logiciel utilisé pour visualiser le modèle virtuel tridimensionnel de la structure physique.

10. Procédé selon la revendication 1, dans lequel la structure physique est une structure anatomique, et les données tridimensionnelles comprennent des données d'imagerie par résonance magnétique ("IRM"), des données de tomodensitométrie ("CT"), des données ultrasonores, et une tomographie par rayons X.

11. Procédé selon la revendication 1, dans lequel la manifestation physique de l'échelle au moins bidimensionnelle est imprimée dans une couleur qui est détectable en utilisant une lumière infrarouge ou ultraviolette.

12. Produit de programme informatique comprenant des instructions qui permettent à un processeur d'exécuter un procédé tel que revendiqué dans l'une quelconque des revendications précédentes.

13. Système comprenant un ou plusieurs processeurs et une mémoire fonctionnellement couplée à l'un ou plusieurs processeurs, dans lequel la mémoire stocke des instructions qui permettent à l'un ou plusieurs processeurs d'exécuter un procédé tel que revendiqué dans l'une quelconque des revendications du procédé 1-11 précédentes.
